# EUROPÄISCHE PATENTSCHRIFT

(11) **EP 2 015 981 B1**
(45) Veröffentlichungstag und Bekanntmachung des Hinweises auf die Patenterteilung: **11.11.2009**
(21) Anmeldenummer: 07728340.6
(22) Anmeldetag: 20.04.2007
(51) Int. Cl.: B62D 65/02, B62D 65/00, B25J 9/00, B23P 21/00, B23K 37/047

(54) **VORRICHTUNG ZUM BEARBEITEN VON BAUTEILEN EINER KRAFTFAHRZEUGKAROSSERIE**
DEVICE FOR MACHINING COMPONENTS, IN PARTICULAR OF A VEHICLE BODY
DISPOSITIF CONÇU POUR USINER DES COMPOSANTS D'UNE CARROSSERIE D'AUTOMOBILE

(30) Priorität: 05.05.2006 DE 102006020922
(43) Veröffentlichungstag der Anmeldung: 21.01.2009
(73) Patentinhaber: ThyssenKrupp Drauz Nothelfer GmbH, 74076 Heilbronn (DE)
(72) Erfinder: KIPPING, Josef, 66839 Schmelz (DE); KLEMM, Thomas, 55779 Heimbach (DE)
(74) Vertreter: Cohausz & Florack
(86) Internationale Anmeldenummer: PCT/EP2007/053881
(87) Internationale Veröffentlichungsnummer: WO 2007/128667

(56) Entgegenhaltungen:
- DE-U1- 20 211 755
- DE-U1- 29 817 895

## Beschreibung

Die Erfindung betrifft eine Vorrichtung zum Bearbeiten von aus mehreren Einzelteilen zusammenzusetzenden Bauteilen für eine Kraftfahrzeugkarosserie mit einem Transport- und Positioniergerät für ein Bauteil und mehreren um dieses Transport- und Positioniergerät herum angeordneten Bearbeitungsstationen, denen das von einem auswechselbaren Bauteilhalter des Transport- und Positioniergerätes in bearbeitungsgerechter Lage gehaltene Bauteil zuführbar ist, indem der Bauteilhalter auf einer geschlossenen Umlaufbahn an den Bearbeitungsstationen vorbeigeführt wird.

Eine solche Vorrichtung wird z.B. im Document DE 29817895U beschrieben.

Bei einer aus der Praxis wohlbekannten Vorrichtung der eingangs genannten Art ist das Transport- und Positioniergerät als Drehtisch mit mindestens einem darauf an seinem Umfang stationär angeordneten Bauteilhalter ausgebildet. Bei Drehung des Drehtisches wird der Bauteilhalter auf einem Kreis zu den außerhalb dieses Kreises angeordneten Bearbeitungsstationen bewegt. Der Wechsel eines Bauteilhalters ist aufwendig. Mittels einer Wechselvorrichtung muss der auszuwechselnde Bauteilhalter zunächst vom Drehtisch abgenommen und außerhalb der Vorrichtung abgelegt werden. Der neue Bauteilhalter wird an einem Ablageplatz aufgenommen und mit der Wechselvorrichtung zum Drehtisch transportiert. Darüber hinaus erfordert eine solche Vorrichtung viel Platz und ist an vorgegebene Räumlichkeiten kaum anpassbar.

Der Erfindung liegt die Aufgabe zugrunde, eine Vorrichtung zum Bearbeiten von aus mehreren Einzelteilen zusammenzusetzenden Bauteilen für eine Kraftfahrzeugkarosserie der eingangs genannten Art zu schaffen, die bei Platz sparender Bauweise einen einfachen und schnellen Wechsel der Bauteilhalter ermöglicht.

Diese Aufgabe wird bei der Vorrichtung der eingangs genannten Art dadurch gelöst, dass oberhalb des Transport- und Positioniergerätes ein Speicher angeordnet ist, der die verschiedenartigen Bauteilhalter an ausgezeichneten Positionen der Umlaufbahn bereithält, wo ein vom Transport- und Positioniergerät getragener Bauteilhalter gegen einen vom Speicher getragenen andersartigen Bauteilhalter austauschbar ist.

Die besondere Zuordnung der Bauteilhalter an bestimmten Positionen über dem Transport- und Positioniergerät ist Platz sparend und ermöglicht einen schnellen und einfachen Wechsel der Bauteilhalter. Das Umfeld des Transport- und Positioniergerätes steht für die Plazierung anderer Geräte, wie Bearbeitungsroboter, Flurtransportfahrzeuge, Ablagen etc. voll zur freien Verfügung. Die Bereitstellung verschiedenartiger Bauteilhalter macht es möglich, auf derselben Fertigungsanlage unterschiedliche Bauteile auch für verschiedene Fahrzeugmodelle zu fertigen. Die erfindungsgemäße Fertigungsanlage zeichnet sich deshalb auch durch eine hohe Flexibilität und kurze Umrüstzeiten aus.

Besonders günstig sind diese Verhältnisse bei einer Ausgestaltung der Erfindung, die dadurch gekennzeichnet ist, dass die geschlossene Umlaufbahn mindestens zwei Scheitelpunkte aufweist, in deren Bereich die Bearbeitungsstationen liegen, dass zwischen benachbarten Scheitelpunkten vom Bauteilhalter bei seiner Bewegung längs der geschlossenen Umlaufbahn nicht überstrichene Freiräume vor allem für die Aufstellung von Bearbeitungsrobotern verbleiben und dass der Speicher die Bauteilhalter in Bereich der Scheitelpunkte bereit hält. Die Kurvenbahn kann eine Ellipse oder Zykloide, insbesondere eine Hypozykloide oder eine Astroide sein. Bei dieser Ausgestaltung der Erfindung sind die ausgezeichneten Punkte der Kurvenbahn, an denen die Bauteilhalter vom Speicher bereitgehalten werden, die Scheitelpunkte.

Solche Bahnkurven lassen sich getriebetechnisch z.B. dadurch realisieren, dass das Transport- und Positioniergerät aus einem Rotor und einem darauf exzentrisch gelagerten, und entgegengesetzt zum Rotor um eine zur Rotorachse parallele Achse angetriebenen, den Bauteilhalter tragenden Schwenkarm besteht, wobei die Drehbewegungen von Rotor und Schwenkarm derart aufeinander abgestimmt sind, dass der Bauteilhalter die geschlossene Kurvenbahn mit den Scheitelpunkten beschreibt.

Vorzugsweise sind die vom Speicher bereit gehaltenen Bauteilhalter an einer gemeinsamen Hubvorrichtung oder individuell absenkbaren Trägern gehalten. So können die Bauteilhalter auf eine ihren Wechsel erleichternde Höhe abgesenkt werden. Bei dem Wechsel könnten auch die mit entsprechenden Greifern auszurüstenden Bearbeitungsroboter eingesetzt werden.

Um möglichst viele verschiedenartige Bauteile bearbeiten zu können, können mehrere verschiedenartige Bauteilhalter hintereinander radial verschiebbar am Speicher gelagert sein. Der gerade benötigte Bauteilhalter lässt sich dann leicht in die optimale Wechselposition bringen.

Die Zufuhr von Energie und Steuerbefehlen zu dem Transport- und Positioniergerät erfolgt vorzugsweise von oberhalb des Transport- und Positioniergerätes über einen auf dem Schwenkarm in dessen Drehachse angeordneten Drehverteiler. Für die Zufuhrleitungen von Energie und Steuerbefehlen kann über dem Drehverteiler nach Art einer Pleuelstange ein Leitungsbaum mit einer zentral in der Achse des Rotors angeordneten Quelle verbunden sein.

Im Folgenden wird die Erfindung anhand einer ein Ausführungsbeispiel schematisch darstellenden Zeichnung näher erläutert. Im Einzelnen zeigen:
- Fig. 1: eine Vorrichtung zum Bearbeiten von Bauteilen mit einem Transport- und Positioniergerät und mehreren Bearbeitungsstationen sowie mehreren Freiräumen für Bearbeitungsroboter in Draufsicht und
- Fig. 2: die Vorrichtung gemäß Fig. 1 in Seitenansicht.

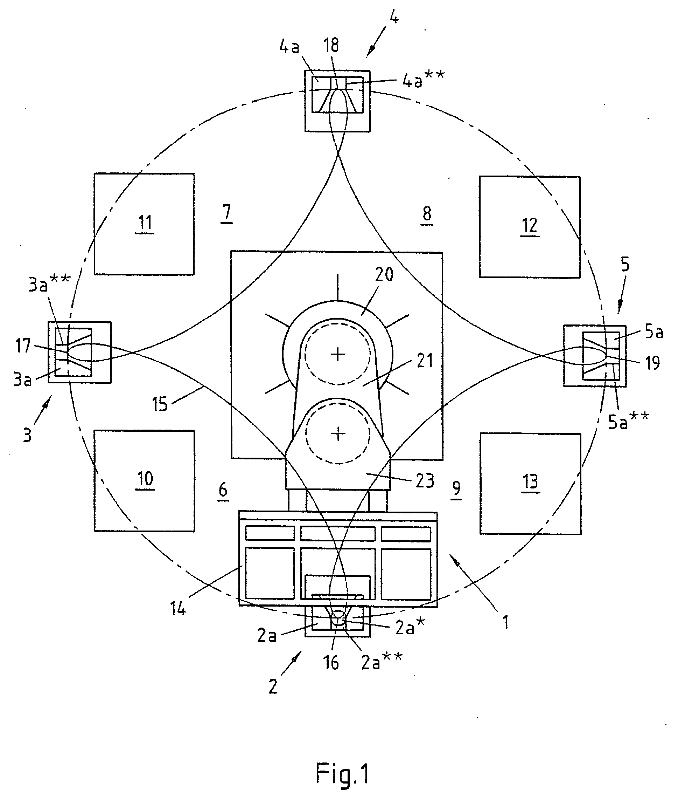

Die Vorrichtung zum Bearbeiten von aus Einzelteilen zusammenzusetzenden Bauteilen für eine Kraftfahrzeugkarosserie weist entsprechend Fig. 1 ein Transport- und Positioniergerät 1 mit mehreren um dieses Transport- und Positioniergerät 1 herum angeordneten Bearbeitungsstationen 2, 3, 4, 5 auf. Zwischen den Bearbeitungsstationen 2, 3, 4, 5 gibt es Freiräume 6, 7, 8, 9, die für verschiedene Zwecke benutzt werden können, insbesondere für die Platzierung von Bearbeitungsrobotern, Werkzeugablagen usw. Die Vorrichtung kann auch so platziert werden, dass in den Freiräumen 6, 7, 8, 9 die tragenden Säulen einer Fertigungshalle stehen. So kann man eine optimale Anpassung an die örtlichen Verhältnisse erreichen. Im Ausführungsbeispiel der Fig. 1 sind die Freiräume 6, 7 für die Platzierung von nur schematisch als Kästen dargestellten Bearbeitungsrobotern 10, 11, 12, 13 genutzt.

Das Transport- und Positioniergerät 1 weist einen auswechselbaren Bauteilhalter 14, z.B. einen bekannten Spannrahmen für das nicht dargestellte, zu bearbeitende Bauteil auf. Dieser Bauteilhalter 14 wird durch das Transport- und Positioniergerät 1 auf einer zykloiden Kurvenbahn 15 mit Scheitelpunkten 16, 17, 18, 19 zu den Bearbeitungsstationen 2, 3, 4, 5 bewegt. In den Scheitelpunkten 16, 17, 18, 19 wird der Bauteilhalter 14 und damit auch das gehaltene Bauteil in einer für die Bearbeitung durch mindestens einen der benachbarten Bearbeitungsroboter 10, 11, 12, 13 passenden Lage gehalten. In der in Fig. 1 dargestellten Lage des Bauteilhalters 14 kann sowohl der Bearbeitungsroboter 10 als auch der Bearbeitungsroboter 13 am Bauteil eine Bearbeitung durchführen. Die besondere Kurvenbahn 15 schafft die Voraussetzung dafür, dass die Vorrichtung mit dem Transport- und Positioniergerät 1 und den Bearbeitungsrobotern 10, 11, 12, 13 sehr kompakt baut, also einen möglichst geringen Flächenbedarf hat.

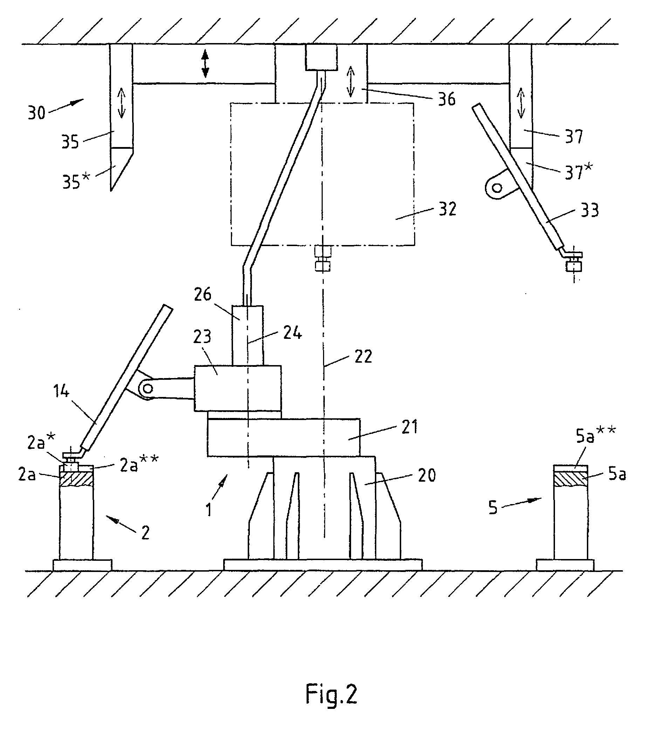

Die beschriebene zykloide Kurvenbahn 15 mit vier Scheitelpunkten 16, 17, 18, 19 gemäß Fig. 1 oder Kurvenbahnen mit einer anderen Anzahl von Scheitelpunkten werden beim Ausführungsbeispiel der Erfindung mit einem besonderen Aufbau und Getriebe des Transport- und Positioniergerätes erreicht. Wie Fig. 2 zeigt, weist das Transport- und Positioniergerät 1 auf einem stationären Sockel 20 einen Rotor 21 mit einem im Einzelnen nicht dargestellten Drehantrieb auf. Auf dem Rotor 21 ist exzentrisch zu dessen Rotorachse 22 ein Schwenkarm 23 um eine zur Rotorachse 22 parallele Achse 24 drehbar gelagert. Der Schwenkarm 23 ist antriebsmäßig mit dem Rotor 22 über ein Rädergetriebe in der Weise gekuppelt, dass die Drehrichtungen von Rotor 22 und Schwenkarm 23 entgegengesetzt sind. So ist z.B. auf dem Sockel 20 ein außen verzahnter Zahnkranz drehfest gehalten, der mit dem vom Rotor 22 getragenen und relativ zu diesem drehbar gelagerten Zwischenzahnrad im Eingriff steht. Das Zwischenzahnrad kämmt mit einem Abtriebszahnrad, das am freien Ende des Rotors 22 drehbar gelagert ist und mit einer Antriebswelle des Schwenkarms 23 drehfest verbunden ist. Über das Verhältnis der Zähnezahl der verschiedenen Zahnräder und die wirksamen Hebelarmlängen von Rotor 22 und Schwenkarm 23 lassen sich die gewünschten unterschiedlichen Bahnkurven erzeugen. In allen Fällen gilt für die gegensinnigen Eigenrotationen von Rotor 21 und Schwenkarm 23 die Beziehung:
Winkelsumme - Taktwinkel = Eigendrehwinkel des Rotors 21, wobei die Winkelsumme = 360° beträgt, der Taktwinkel der Winkel zwischen den benachbarten Scheitelpunkten 16, 17, 18, 19 /Bearbeitungsstationen = Winkel der Eigenrotation des Schwenkarms 23 bzw. des Bauteilhalters 14 zwischen den benachbarten Bearbeitungsstationen ist und Eigendrehwinkel des Rotors 21 der Drehwinkel des Rotors 21 ist, den der Rotor 21 zurücklegt, um den Schwenkarm 23 bzw. den Bauteilhalter 14 um einen Taktwinkel, d.h. von einer Bearbeitungsstation zur nächsten weiterzubewegen.

Der Schwenkarm 23 trägt an seinem freien Ende auswechselbar den Bauteilhalter 14, insbesondere einen Spannrahmen, mit dem das zu bearbeitende Bauteil in einer exakt vorgegebenen bearbeitungsgerechten Lage gehalten werden kann. Zur Unterstützung der Positionierung in dieser Lage kann in den Bearbeitungsstationen 2, 3, 4, 5 jeweils eine Zentriereinheit 2a, 3a, 4a, 5a vorgesehen sein, die aus einem vertikal gelagerten Stützrad 2a* am Schwenkarm 23 oder Bauteilhalter 14 und einer stationären Kulissenführung 2a**, 3a**, 4a**, 5a** besteht, in die das Stützrad 2a* bei der im Wesentlichen radialen Bewegung des Bauteilhalters 14 einläuft.

Auf dem Schwenkarm 23 ist in dessen Drehachse 24 ein Drehverteiler 26 für die Zufuhr von Energie und Steuerbefehlen angeordnet, der mit einem ortsfesten Anschlusspunkt z.B. an der Hallendecke verbunden ist.

An der Hallendecke ist ein sternförmiger, im Ausführungsbeispiel ein kreuzförmiger Speicher 30 mit den vier Scheitelpunkten 16, 17, 18, 19 für mehrere verschiedenartige Bauteilhalter 32, 33 mit Trägern 35, 36, 37 gehalten. Entweder ist der Speicher 30 mit allen Trägern 35, 36, 37 gemeinsam oder aber die Träger 35, 36, 37 sind individuell absenkbar. Jeder Träger 35, 36, 37 ist mit einem Greifer 35*, 36*, 37* ausgerüstet, mit dem ein Bauteilhalter 32, 33 in einer günstigen Wechselposition fixiert gehalten werden kann.

Ein Bauteilhalterwechsel erfolgt auf folgende Art und Weise:
Im Ausführungsbeispiel ist der Träger 35 leer. Der nicht mehr benötigte Bauteilhalter 14 befindet sich bereits unter dem Träger 35. Dieser wird abgesenkt und erfasst mit seinem Greifer 35* den Bauteilhalter 14. Nachdem letzter vom Schwenkarm 23 abgekuppelt ist, wird er durch den Träger 35 in seine obere Parkposition gehoben. Um den Schwenkarm 23 mit einem neuen Bauteilhalter z.B. 33 zu bestücken, wird durch Verdrehen des Transport- und Positioniergerätes 1 der Schwenkarm 23 in die Bearbeitungsstation 5 gebracht. Mit dem Träger 37 wird der Bauteilhalter 33 aus seiner oberen Parkposition in seine untere Wechselposition abgesenkt, wo er an den Schwenkarm 23 angekuppelt und vom Greifer 37* freigegeben wird.

Der Speicher 30 lässt sich ohne größeren vorrichtungstechnischen Aufwand mit noch mehr verschiedenartigen Bauteilhaltern bestücken, indem diese mit ihren Trägern hintereinander radial verschiebbar am Speicher'30 gelagert sind. Der benötigte Bauteilhalter kann dann durch radiales Verschieben in die für den Wechsel günstige Position gebracht werden.

## Patentansprüche

1. Vorrichtung zum Bearbeiten von aus mehreren Einzelteilen zusammenzusetzende Bauteile für eine Kraftfahrzeugkarosserie mit einem Transport- und Positioniergerät (1) für ein Bauteil und mehreren um dieses Transport- und Positioniergerät (1) herum angeordneten Bearbeitungsstationen (2, 3, 4, 5), denen das von einem auswechselbaren Bauteilhalter (14) des Transport- und Positioniergerätes (1) in bearbeitungsgerechter Lage gehaltene Bauteil zuführbar ist, indem der Bauteilhalter (14) auf einer geschlossenen Umlaufbahn (15) an den Bearbeitungsstationen (2, 3, 4, 5) vorbeigeführt wird, **dadurch gekennzeichnet, dass** oberhalb des Transport- und Positioniergerätes (1) ein Speicher (30) angeordnet ist, der verschiedenartige Bauteilhalter (14, 32, 33) an ausgezeichneten Positionen der Umlaufbahn (15) bereithält, wo ein vom Transport- und Positioniergerät (1) getragener Bauteilhalter (14) gegen einen vom Speicher (30) getragenen andersartigen Bauteilhalter (32, 33) austauschbar ist.

2. Vorrichtung nach Anspruch 1, **dadurch gekennzeichnet, dass** die geschlossene Umlaufbahn mindestens zwei Scheitelpunkte (16, 17, 18, 19) aufweist, in deren Bereich die Bearbeitungsstationen (2, 3, 4, 5) liegen, dass zwischen benachbarten Scheitelpunkten 16, 17, 18, 19) vom Bauteilhalter (14) bei seiner Bewegung längs der geschlossenen Umlaufbahn (15) nicht überstrichene Freiräume (6, 7, 8, 9) verbleiben und dass der Speicher (30) die Bauteilhalter (32, 33) in Bereich der Scheitelpunkte (16, 17, 18, 19) bereit hält.

3. Vorrichtung nach Anspruch 1 oder 2, **dadurch gekennzeichnet, dass** das Transport- und Positioniergerät (1) aus einem Rotor (21) und einem darauf exzentrisch gelagerten, und entgegengesetzt zum Rotor (21) um eine zur Rotorachse (22) parallele Achse (24) angetriebenen, den Bauteilhalter (14) tragenden Schwenkarm (23) besteht, wobei die Drehbewegungen von Rotor (21) und Schwenkarm (23) derart aufeinander abgestimmt sind, dass der Bauteilhalter (14) die geschlossene Kurvenbahn (15) mit den Scheitelpunkten (16, 17, 18, 19) beschreibt.

4. Vorrichtung nach einem der Ansprüche 1 bis 3, **dadurch gekennzeichnet, dass** die vom Speicher bereit gehaltenen Bauteilhalter (32, 33) über Träger an einer gemeinsamen Hubvorrichtung oder individuell absenkbaren Trägern(36, 37) gehalten sind.

5. Vorrichtung nach einem der Ansprüche 1 bis 4, **dadurch gekennzeichnet, dass** mehrere Bauteilhalter (32, 33) hintereinander radial verschiebbar am Speicher (30) gelagert sind.

## Claims

1. A device for machining components made up of a plurality of individual parts for a motor vehicle body comprising a transport and positioning unit (1) for a component and a plurality of machining stations (2, 3, 4, 5) arranged around said transport and positioning unit (1), to which the component held by an exchangeable component holder (14) of the transport and positioning unit (1) may be fed in a position ready for machining, by the component holder (14) being guided past the machining stations (2, 3, 4, 5) on a closed circulating path (15), **characterised in that** above the transport and positioning unit (1) a store (30) is arranged which holds in readiness different types of component holder (14, 32, 33) at specific positions on the circulating path (15), where a component holder (14) supported by the transport and positioning unit (1) may be exchanged for a different type of component holder (32, 33) carried by the store (30).

2. The device according to Claim 1, **characterised in that** the closed circulating path comprises at least two apexes (16, 17, 18, 19), the machining stations (2, 3, 4, 5) being located in the region thereof, **in that** free spaces (6, 7, 8, 9) remain between adjacent apexes (16, 17, 18, 19) which are not passed over by the component holder (14) during its movement along the closed circulating path (15), and **in that** the store (30) holds in readiness the component holders (32, 33) in the region of the apexes (16, 17, 18, 19).

3. The device according to Claim 1 or 2, **characterised in that** the transport and positioning unit (1) consists of a rotor (21) and a pivoting arm (23) supporting the component holder (14) and mounted eccentrically thereon and driven in opposition to the rotor (21) about an axis (24) parallel to the rotor axis (22), the rotational movements of the rotor (21) and the pivoting arm (23) being synchronised such that the component holder (14) describes the closed curved path (15) comprising the apexes (16, 17, 18, 19).

4. The device according to one of Claims 1 to 3, **characterised in that** the component holders (32, 33) held in readiness by the store are held via supports on a common lifting device or via individually lowerable supports (36, 37).

5. The device according to one of Claims 1 to 4, **characterised in that** a plurality of component holders (32, 33) are radially displaceably mounted on the store (30) one behind the other.

## Revendications

1. Dispositif pour l'usinage de composants d'une carrosserie de véhicule automobile, composés de plusieurs pièces individuelles, avec un appareil de transport et de positionnement (1) pour un composant et plusieurs postes de traitement (2, 3, 4, 5) disposés autour de cet appareil de transport et de positionnement (1), auxquels le composant, maintenu en position de traitement par un porte-pièce interchangeable (14) de l'appareil de transport et de positionnement (1), peut être conduit, en faisant passer le porte-pièce (14) par les postes de traitement (2, 3, 4, 5), sur une voie de circulation (15) en circuit fermé, **caractérisé en ce que**, au-dessus de l'appareil de transport et de positionnement (1), est disposé un magasin (30), qui tient à disposition différents porte-pièces (14) à des positions marquées de la voie de circulation en circuit fermé (15), où un porte-pièce (14), porté par un appareil de transport et de positionnement (1) peut être échangé contre un porte-pièce (32, 33) d'un autre genre, porté par le magasin (30).

2. Dispositif selon la revendication 1, **caractérisé en ce que** la voie de circulation en circuit fermé présente au moins deux sommets (16, 17, 18, 19), dans la région desquels sont situés les postes de traitement (2, 3, 4, 5), qu'entre des sommets (16, 17, 18, 19) du porte-pièce (14), demeurent des espaces libres (6, 7, 8, 9), qui ne sont pas atteints par le porte-pièce (14), lors de son déplacement le long de la voie de circulation en circuit fermé (15), et que le magasin (30) tient les porte-pièces (32, 33) à disposition dans la régions des sommets (16, 17, 18).

3. Dispositif selon la revendication 1 ou 2, **caractérisé en ce que** l'appareil de transport et de positionnement (1) se compose d'un rotor (21) et d'un bras pivotant (23), qui, monté excentriquement sur celui-ci et entraîné, à l'opposé du rotor (21), autour d'un axe parallèle à l'axe (22) du rotor, porte le porte-pièce (14), les mouvements de rotation du rotor (21) et du bras pivotant (23) étant adaptés l'un à l'autre de sorte que le porte-pièce (14) décrive le trajet courbe, en circuit fermé (15), avec les sommets (16, 17, 18, 19).

4. Dispositif selon l'une des revendications 1 à 3, **caractérisé en ce que** les porte-pièces (32, 33), mis à disposition par le magasin, sont maintenus, par l'intermédiaire de supports, sur un dispositif de levage commun ou des supports (36, 37), qui peuvent être abaissés individuellement.

5. Dispositif selon l'une des revendications 1 à 4, **caractérisé en ce que** plusieurs porte-pièces (32, 33), disposés les uns derrière les autres, déplaçables radialement, sont montés sur le magasin (30).
